# EUROPEAN PATENT APPLICATION

(11) **EP 4 091 756 A1**
(43) Date of publication of application: **23.11.2022**
(21) Application number: 21761923.8
(22) Date of filing: 15.02.2021
(51) Int. Cl.: B23K 11/30, B23K 11/11

(54) **RESISTANCE SPOT WELDING METHOD**

(30) Priority: 25.02.2020 JP 2020000622 U; 22.07.2020 JP 2020125561
(71) Applicant: KABUSHIKI KAISHA KOBE SEIKO SHO (KOBE STEEL, LTD.), Hyogo 651-8585 (JP)
(72) Inventor: SHIMODA, Yoichiro, Kanagawa 251-8551 (JP)
(74) Representative: Müller-Boré & Partner Patentanwälte PartG mbB
(86) International application number: PCT/JP2021/005575
(87) International publication number: WO 2021/172080

(57) **Abstract**

The objective of the invention is to suppress, in a resistance spot welding method in which a high-strength galvanized steel sheet is used, the occurrence of an LME crack in a pressure-welded portion of a resistance spot welded joint. The invention pertains to a resistance spot welding method for spot-welding a plurality of steel sheets M having at least one steel sheet M that has been galvanized, has a tensile strength of 980 MPa or higher, and contains 0.08% by mass or more C and 0.50% by mass or more Si, wherein a pair of electrodes (20A, 20B) are used that comprise a pair of electrode tips (23A, 23B) for sandwiching and applying pressure to the plurality of steel sheets M and an elastic member (24) constituting an angle correction mechanism capable of correcting an angle θ with respect to the steel sheet M, for at least one of the electrode tips (23A or 23B). The method comprises sandwiching the plurality of steel sheets M between the pair of electrode tips (23A, 23B), imparting a compressive force on the pair of electrode tips (23A, 23B) while the pair of electrode tips (23A, 23B) are in contact with the steel sheets M so as to be approximately vertical thereto, and in this state, performing energization, to thereby carry out the resistance spot welding.

## Description

### TECHNICAL FIELD

The present invention relates to a resistance spot welding method.

### BACKGROUND ART

In recent years, in order to reduce the weight of a vehicle body and to enhance collision safety for the purpose of reducing the amount of CO₂ emissions, a high tensile strength steel (HTSS) sheet has been widely applied to a body frame of an automobile or the like. In addition, resistance spot welding is mainly used in assembly of a vehicle body of an automobile, attachment of components, and the like, and is also applied to welding of a high tensile strength steel sheet.

From the viewpoint of rust prevention, a high tensile strength steel sheet subjected to galvanizing, which has excellent corrosion resistance, is also often used as an automotive steel sheet. However, there has been known that, when resistance spot welding is performed using a high-strength galvanized steel sheet, zinc melted on the surface of the steel sheet at the welding portion or an alloy of zinc and copper of an electrode enters a crystal grain boundary of the steel sheet to reduce the grain boundary strength, which tends to cause a grain boundary embrittlement crack called liquid metal embrittlement (LME). When such a crack occurs, the strength of the weld is reduced, and thus the reliability of a resistance spot welded joint is reduced. Therefore, measures in terms of construction are required.

Patent Literature 1 discloses a resistance spot welding method which includes a welding step of energizing by a welding electrode while pressuring with a pressurizing force F1, and a cooling step of holding pressurizing with a pressurizing force F2 immediately after the completion of the energization, and by which an LME crack can be inhibited when the pressurizing force satisfies a relationship of F2 > F1 × 2. Patent Literature 2 discloses a resistance spot welding method capable of inhibiting an LME crack by appropriately controlling a pressurizing force holding time after the completion of energization. Further, in Patent Literature 3, a flanged rod is inserted into a cylindrical socket screwed to a base member of one electrode, and a convex spherical base provided at a base end of the flanged rod is brought into contact with a receiving surface of the base member. A spot welding machine is described in which a swing center of the convex spherical base of the flanged rod is positioned substantially near a center of the flanged rod, and an amount of shift from an original position of an electrode tip provided at a tip end portion of the flanged rod can be prevented.

### CITATION LIST

### PATENT LITERATURE

Patent Literature 1: JP-A-2019-171450
Patent Literature 2: WO2017/033455
Patent Literature 3: Microfilm of JP-UM-S58-168076 (JP-UM-S60-74871)

### SUMMARY OF INVENTION

### TECHNICAL PROBLEM

In the spot welding machine described in Patent Literature 3, the electrode tip of one electrode is made swingable to reduce the tensile stress and inhibit the LME crack, but further improvement is required. The spot welding methods described in Patent Literatures 1 and 2 do not consider reducing the tensile stress to inhibit the LME crack.

For the electrode itself, in order to prevent excessive temperature rising, it is necessary to maintain a cooled state during welding using cooling water, etc., and the cooling mechanism is also required for a mechanism capable of adjusting an angle (tilt angle) between the steel sheet and the electrode.

The present invention has been made in view of the above-described problems, and an object of the present invention is to provide a resistance spot welding method using a high-strength galvanized steel sheet, by which the occurrence of an LME crack in a pressure contact portion of a resistance spot welded joint is inhibited.

### SOLUTION TO PROBLEM

Therefore, the above object of the present invention is achieved by the following configuration (1) according to one resistance spot welding method.
(1) A resistance spot welding method for spot welding a plurality of steel sheets including at least one galvanized steel sheet containing 0.08 mass% or more of C and 0.50 mass% or more of Si and having a tensile strength of 980 MPa or more,
   the resistance spot welding method including, using a pair of electrodes including a pair of electrode tips configured to sandwich and pressurize the plurality of steel sheets and a pressurizing force absorbing mechanism provided in at least one of the pair of electrode tips and capable of absorbing a pressurizing force in an axial direction of the electrode tips,
   welding by sandwiching the plurality of steel sheets between the pair of electrode tips and energizing the pair of electrode tips with a pressurizing force applied, while absorbing a fluctuation load of the pressurizing force generated during the energization by the pressurizing force absorbing mechanism.

   According to this configuration, the welding is performed while absorbing, by the pressurizing force absorbing mechanism, the fluctuation load of the pressurizing force generated when joining the plurality of steel sheets, whereby an LME crack is inhibited, and thus resistance spot welding excellent in welding quality can be performed.
   A preferred embodiment of the resistance spot welding method according to the present invention relates to the following (2) to (5).
(2) The resistance spot welding method according to (1), in which one of the pair of electrodes is a fixed electrode and the other is a movable electrode, and the pressurizing force absorbing mechanism is provided on a side of the movable electrode.
   According to this configuration, the fluctuation load of the pressurizing force generated when joining the plurality of steel sheets can be absorbed by the pressurizing force absorbing mechanism provided on the side of the movable electrode, and thus the occurrence of the LME crack can be inhibited.
(3) The resistance spot welding method according to (1) or (2), in which the pressurizing force absorbing mechanism is a mechanism using an elastic member.
   According to this configuration, the fluctuation load of the pressurizing force can be efficiently absorbed by a compact mechanism.
(4) The resistance spot welding method according to (3), in which the elastic member is formed of a spring having a spring constant of 10 N/mm or more and 1500 N/mm or less.
   According to this configuration, it is possible to absorb the fluctuation load of the pressurizing force while securing the pressurizing force necessary for welding.
(5) The resistance spot welding method according to (1) or (2), in which the pressurizing force absorbing mechanism is a mechanism using a pneumatic pressure.
   According to this configuration, the pressurizing force absorbing mechanism can be configured using an air cylinder or the like.
   In addition, the above object of the present invention is achieved by the following configuration (6) according to another resistance spot welding method.
(6) A resistance spot welding method for spot welding a plurality of steel sheets including at least one galvanized steel sheet containing 0.08 mass% or more of C and 0.50 mass% or more of Si and having a tensile strength of 980 MPa or more,
   the resistance spot welding method including, using a pair of electrodes including a pair of electrode tips configured to sandwich and pressurize the plurality of steel sheets and a pair of angle correction mechanisms capable of correcting angles of the pair of electrode tips with respect to the steel sheets, respectively,
   welding by sandwiching the plurality of steel sheets between the pair of electrode tips and energizing the pair of electrode tips with a pressurizing force applied, while bringing the pair of electrode tips into contact with the plurality of steel sheets such that axes of the pair of electrode tips are substantially perpendicular to the steel sheets.

   According to this configuration, the electrode tips are brought into contact with the steel sheets substantially perpendicularly, and welding is performed with a corrected tilt angle, whereby the tensile stress can be reduced, and thus the occurrence of the LME crack can be inhibited. The term "substantially perpendicularly" as used herein means an angle that can be industrially achieved, and an angle error of, for example, 90° ± 5° is allowed.
   A preferred embodiment of the resistance spot welding method according to the present invention relates to the following (7) to (15).
(7) The resistance spot welding method according to (6), in which at least one of the pair of angle correction mechanisms is a mechanism using a universal joint.
   According to this configuration, the tilt angle can be corrected, and a position of the steel sheet sandwiched between the pair of electrode tips in a sheet thickness direction can be easily positioned.
(8) The resistance spot welding method according to (7), in which one of the pair of electrodes is a fixed electrode and the other is a movable electrode, and the mechanism using a universal joint is provided on a side of the fixed electrode.
   According to this configuration, the tilt angle on the side of the fixed electrode can be corrected, and the position of the steel sheet sandwiched by the pair of electrodes in the sheet thickness direction can be easily positioned.
(9) The resistance spot welding method according to (8), in which one of the pair of angle correction mechanisms is the mechanism using a universal joint provided on the side of the fixed electrode, and the other is a mechanism using an elastic member provided on a side of the movable electrode.
   According to this configuration, it is possible to correct the tilt angle of the pair of electrodes and to absorb the fluctuation load of the pressurizing force generated during energization, and thus the occurrence of the LME crack can be inhibited.
(10) The resistance spot welding method according to (9), in which the elastic member is formed of a spring having a spring constant of 10 N/mm or more and 1500 N/mm or less.
   According to this configuration, it is possible to absorb the fluctuation load of the pressurizing force while securing the pressurizing force necessary for welding.
(11) The resistance spot welding method according to (7), in which both of the pair of angle correction mechanisms are the mechanism using a universal joint.
   According to this configuration, an operation time of the resistance spot welding can be shortened as compared with the case where at least one of the electrodes includes the elastic member.
(12) The resistance spot welding method according to any one of (1) to (11), in which the electrode tip has a curvature radius R of a tip end surface satisfying R ≤ 100 mm, and an outer diameter ϕ of the electrode tip satisfying ϕ ≤ 16 mm.
   According to this configuration, the tip end surface of the electrode tip can be reliably brought into contact with the steel sheet.
(13) The resistance spot welding method according to any one of (1) to (11), in which at least a part of a tip end portion of the electrode tip has a flat surface to be in contact with the steel sheet.
   According to this configuration, the flat surface of the electrode tip is in surface contact with the steel sheet, whereby slip is less likely to occur between the steel sheet and the flat surface, and thus stable spot welding can be performed.
(14) The resistance spot welding method according to any one of (1) to (13), in which pressuring is held for 0.01 sec or longer after completion of the energization, and then control is performed to switch from pressurization to pressure release of the electrodes.
   According to this configuration, a cooling time after welding can be secured, and thus the occurrence of LME crack can be inhibited.
(15) The resistance spot welding method according to any one of (1) to (14), in which a welding current is an alternating current.

According to this configuration, the resistance spot welding can be performed using a commercial power supply.

### ADVANTAGEOUS EFFECTS OF INVENTION

According to the resistance spot welding method of the present invention, the welding is performed while absorbing, by the pressurizing force absorbing mechanism, the fluctuation load of the pressurizing force generated during the energization, whereby the stress fluctuation to the steel sheet is relaxed, the occurrence of the LME crack is inhibited, and thus the resistance spot welding with excellent welding quality can be performed.

According to another resistance spot welding method of the present invention, the welding is performed with the corrected tilt angle between the electrode tip and the steel sheet by the angle correction mechanism and a reduced tensile stress, whereby the occurrence of the LME crack can be inhibited, and thus the resistance spot welding with excellent welding quality can be performed.

### BRIEF DESCRIPTION OF DRAWINGS

[FIG. 1] FIG. 1 is a side view showing a resistance spot welding apparatus according to a first embodiment of the present invention.
[FIG. 2] FIG. 2 is a perspective view showing a movable-side electrode shown in FIG. 1.
[FIG. 3] FIG. 3 is a side view showing the movable-side electrode shown in FIG. 2.
[FIG. 4] FIG. 4 is a cross-sectional view taken along a line IV-IV in the movable-side electrode shown in FIG. 2.
[FIG. 5A] FIG. 5A is a diagram showing a state where a movable-side electrode and a fixed-side electrode are tilted with respect to a metal sheet at the time of spot welding.
[FIG. 5B] FIG. 5B is a diagram showing a state where the movable-side electrode is in contact with the metal sheet substantially perpendicularly at the time of spot welding, and a tilt angle is corrected.
[FIG. 6] FIG. 6 is a cross-sectional view showing a comparison between joints which are resistance spot welded by a resistance spot welding apparatus of related art in which both a movable-side electrode and a fixed-side electrode are rigid electrodes, and the resistance spot welding apparatus according to the first embodiment.
[FIG. 7] FIG. 7 is a graph showing a comparison between changes in a pressurizing force and a welding current when performing resistance spot welding by the resistance spot welding apparatus of the related art and the resistance spot welding apparatus according to the first embodiment.
[FIG. 8] FIG. 8 is a side view showing a resistance spot welding apparatus according to a second embodiment of the present invention.
[FIG. 9] FIG. 9 is a perspective view showing a fixed-side electrode of the resistance spot welding apparatus shown in FIG. 8.
[FIG. 10] FIG. 10 is a side view showing the fixed-side electrode shown in FIG. 9.
[FIG. 11] FIG. 11 is a cross-sectional view taken along a line XI-XI in the fixed-side electrode shown in FIG. 9.
[FIG. 12] FIG. 12 is a side view showing a resistance spot welding apparatus according to a third embodiment of the present invention.
[FIG. 13] FIG. 13 is a side view showing a resistance spot welding apparatus according to a fourth embodiment of the present invention.
[FIG. 14] FIG. 14 is a perspective view showing an electrode of the resistance spot welding apparatus shown in FIG. 13.
[FIG. 15] FIG. 15 is a cross-sectional perspective view showing the electrode shown in FIG. 14.
[FIG. 16] FIG. 16 is an enlarged view showing a region S in FIG. 15.
[FIG. 17] FIG. 17 is a longitudinal cross-sectional view showing the electrode shown in FIG. 14.
[FIG. 18A] FIG. 18A is a diagram showing a state where the movable-side electrode and the fixed-side electrode are tilted with respect to the metal sheet at the time of spot welding.
[FIG. 18B] FIG. 18B is a diagram showing a state where the movable-side electrode and the fixed-side electrode are in contact with the metal sheet substantially perpendicularly at the time of spot welding, and tilt angles of both electrodes are corrected.

### DESCRIPTION OF EMBODIMENTS

Hereinafter, embodiments of a resistance spot welding apparatus suitable for applying a resistance spot welding method according to the present invention are described in detail with reference to the drawings.

A resistance spot welding apparatus of each embodiment is for spot welding a plurality of metal sheets (steel sheets), and is particularly suitably used when at least one of the metal sheets is a high tensile strength steel (HTSS) sheet containing 0.08 mass% or more of C and 0.50 mass% or more of Si and having a tensile strength of 980 MPa or more, and is a galvanized steel sheet the surface of which is galvanized. Examples of the galvanized steel sheet include a hot-dip galvannealed steel sheet (GA), a hot-dip galvanized steel sheet (GI), and an electrogalvanized steel sheet (EG).

### (First Embodiment)

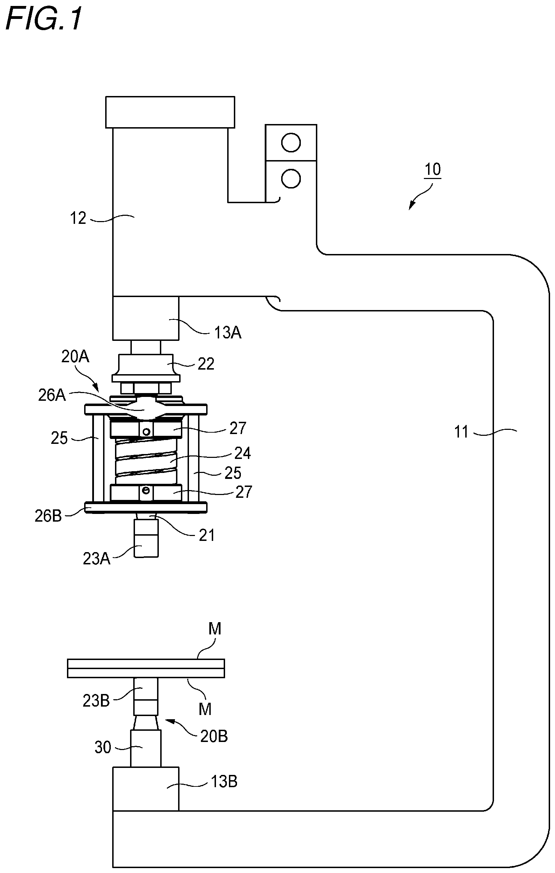

As shown in FIG. 1, a resistance spot welding apparatus 10 of the present embodiment includes a frame 11 having a substantially C-shape in a plan view, a pressurizing cylinder 12 provided at one end of the frame 11, two bases 13A and 13B provided at opposite ends of the pressurizing cylinder 12 and the frame 11, a first electrode 20A, as a movable-side electrode, provided on the base 13A on a movable side, and a second electrode 20B, as a fixed-side electrode, provided on the base 13B on a fixed side. The pressurizing cylinder 12, together with the base 13A, drives the first electrode 20A downward toward the second electrode 20B. The first electrode 20A and the second electrode 20B are disposed so as to face each other on the same axis.

When performing spot welding, a metal sheet M, obtained by superposing a plurality of (two in the drawing) bodies to be joined, is inserted between the first electrode 20A and the second electrode 20B, the first electrode 20A is advanced by the pressurizing cylinder 12 in a state where the metal sheet M is in contact with the second electrode 20B, and the metal sheet M is sandwiched between the pair of electrodes 20A and 20B. In this state, energization is performed between the pair of electrodes 20A and 20B while being pressurized to perform spot welding.

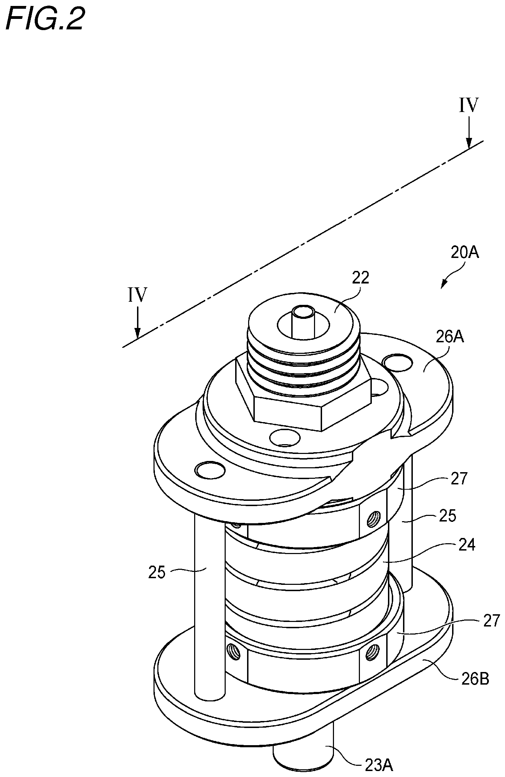

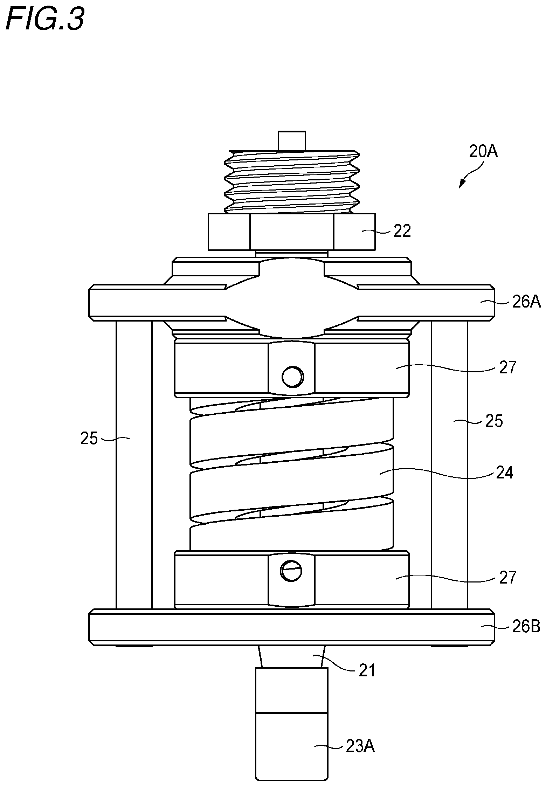

As shown in FIGS. 2 to 4, the first electrode 20A includes a first shank 21, a second shank 22, an electrode tip 23A, an elastic member 24 as a connection member, a conductive wire 25, and a pair of rings 26A and 26B.

The first shank 21 and the second shank 22 are formed of a metal (alloy) such as brass, and have conductivity. The first shank 21 and the second shank 22 are screwed and fixed to the pair of rings 26A and 26B. The electrode tip 23A is provided at one end of the first shank 21, which is a tip end of the first electrode 20A, and is a member that is in direct contact with the metal sheet M such as a steel sheet.

The elastic member 24 is disposed between the pair of upper and lower rings 26A and 26B via a pair of spring bases 27 and 27, and connects the first shank 21 and the second shank 22. Specifically, in the present embodiment, the elastic member 24 is formed of a coil spring.

The spring constant of the coil spring is preferably 10 N/mm or more and 1500 N/mm or less. As a result, in the spot welding, the electrode tip 23A tilts in accordance with the tilt of the metal sheet M and becomes substantially perpendicular to the metal sheet M, and the rigidity capable of applying the pressurizing force necessary for the spot welding to the metal sheet M is secured. That is, the elastic member 24 acts as an angle correction mechanism capable of correcting an angle of the electrode tip 23A with respect to the metal sheet M to correct a tilt angle. In addition, the elastic member 24 is further elastically deformed when the molten metal of the metal sheet M expands by sandwiching the plurality of metal sheets M and energizing the pair of electrode tips 23A and 23B with the pressurizing force applied, thereby inhibiting an increase in the pressurizing force. That is, the elastic member 24 acts as a pressurizing force absorbing mechanism capable of absorbing the pressurizing force in an axial direction of the electrode tip.

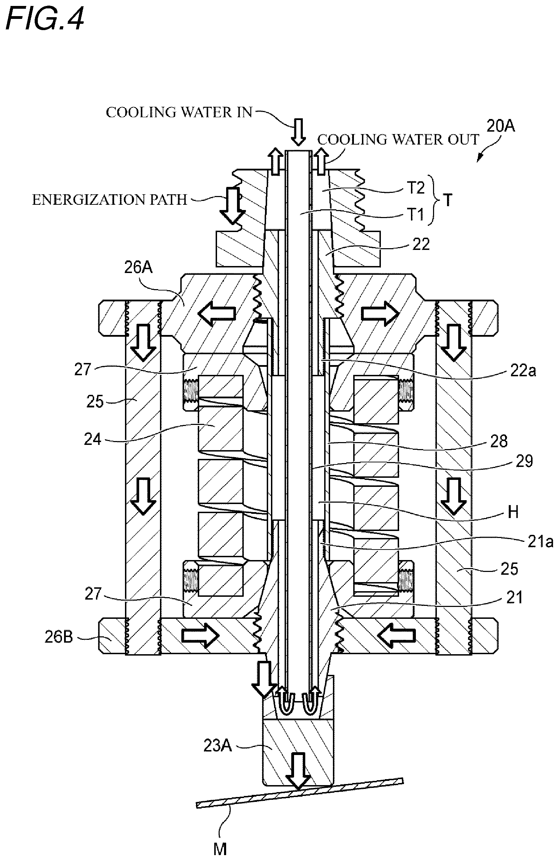

The conductive wire 25 made of a metal (e.g., copper) is connected to the rings 26A and 26B formed of a metal (e.g., copper) and attached to the outer peripheries of the first shank 21 and the second shank 22, respectively. Although the elastic member 24 is made of a metal, it is difficult to secure sufficient electrical connection between the first shank 21 and the second shank 22 via the elastic member 24 since a large current is required for spot welding. Therefore, the conductive wire 25 is provided so as to bypass the outside of the elastic member 24, and electrically connects the first shank 21 and the second shank 22. The current supplied from a main body of the spot welding machine 10 via the pressurizing cylinder 12 and the base 13A is allowed to flow in order of the second shank 22, the ring 26A, the conductive wire 25, the ring 26B, the first shank 21, and the electrode tip 23A in accordance with an arrow of an "energization path" in FIG. 4, and reaches the metal sheet M. The current for spot welding is not particularly limited, but an alternating current that can be easily used can be used.

The first electrode 20A has a structure for allowing not only a current but also cooling water for cooling the electrode tip 23A at the tip end to flow. That is, as shown in FIG. 4, a flow path T for allowing the cooling water to flow is provided so as to penetrate the inside of each of the first shank 21, the elastic member 24, and the second shank 22.

The flow path T includes a forward path T1 for allowing the cooling water supplied from the main body of the spot welding machine 10 to the electrode tip 23A to flow, and a backward path T2 for returning the cooling water that has cooled the electrode tip 23A to the main body of the spot welding machine 10. The backward path T2 is formed by an internal space H penetrating the inside of each of the cylindrical first shank 21, the elastic member 24, and the cylindrical second shank 22. As shown in FIG. 4, a hose 28 is connected to hose joints 21a and 22a formed at the upper end of the first shank 21 and the lower end of the second shank 22, respectively. The hose 28 is disposed inside the elastic member 24. Therefore, in practice, the insides of the hose joints 21a and 22a and the inside of the hose 28 form the internal space H.

The forward path T1 is disposed in the internal space H, and is formed by an integrated pipe 29 penetrating the first shank 21, the elastic member 24, and the second shank 22. As shown in FIG. 4, the pipe 29 is a cylindrical elongated member disposed on a central axis of the internal space H and formed of, for example, a resin.

As indicated by an arrow of "cooling water IN" in FIG. 4, the cooling water supplied from the main body of the spot welding machine 10 is allowed to flow through the pipe 29 from the second shank 22 via the elastic member 24 and the first shank 21, and reaches the electrode tip 23A. As indicated by an arrow of "cooling water OUT", the cooling water which has reached the electrode tip 23A and whose temperature has risen is allowed to flow through the internal space H outside the pipe 29 via the first shank 21, the elastic member 24, and the second shank 22, returns to the main body of the spot welding machine 10, and is cooled again.

In this way, the cooling water circulates between the main body of the spot welding machine 10 and the electrode tip 23A, and the cooling water which has been cooled to a certain temperature or less is supplied to the electrode tip 23A at all times. Therefore, the temperature rising of the first electrode 20A, particularly the electrode tip 23A, can be inhibited, and the joining efficiency of spot welding can be improved.

Returning to FIG. 1, in the second electrode 20B which is a fixed-side electrode, the electrode tip 23B is fixed to one end of a fixed-side shank 30 provided on the base 13B on the fixed side. The electrode tip 23B is formed of a metal (alloy) having conductivity and is in direct contact with the metal sheet M. The second electrode 20B does not include the elastic member 24 provided on the first electrode 20A, and is a rigid electrode having high rigidity.

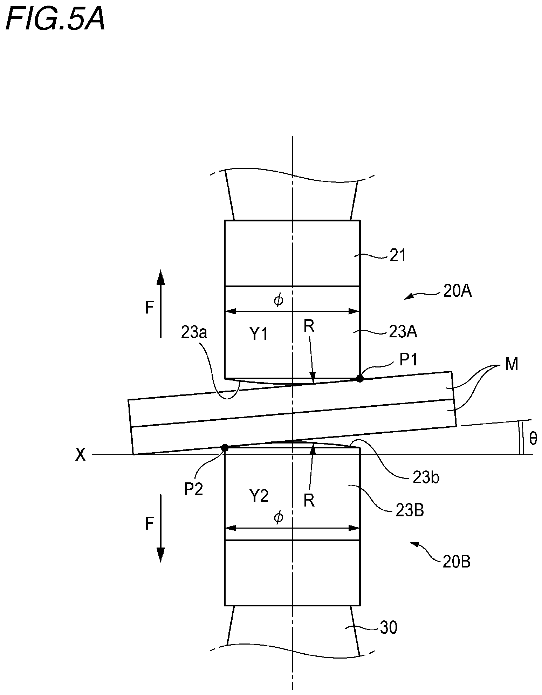

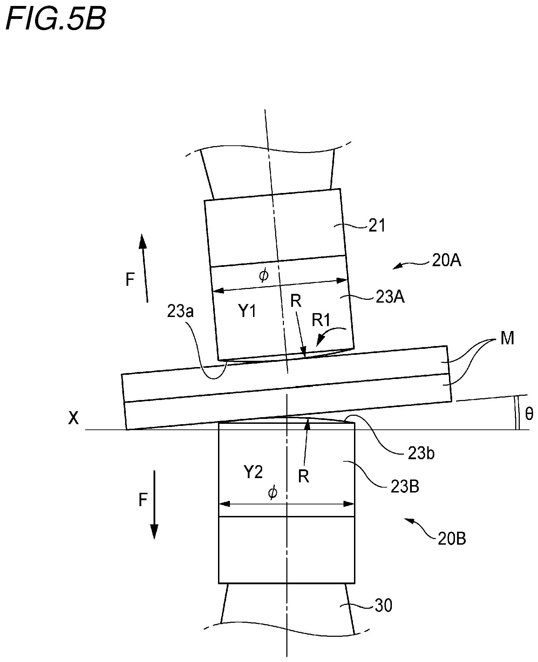

As shown in FIG. 5A and FIG. 5B, the outer diameter ϕ of the electrode tips 23A and 23B is ϕ ≤ 16 mm, and the curvature radius R of tip end surfaces 23a and 23b in contact with the metal sheet M is R ≤ 100 mm. As a result, the electrode tips 23A and 23B are prevented from being in uneven contact with the metal sheet M, and reliably in contact with the metal sheet M.

At least a part of the shape of the tip end surfaces 23a and 23b of the electrode tips 23A and 23B may be a flat surface. When the electrode tips 23A and 23B are substantially perpendicular to the metal sheet M, the flat surfaces of the electrode tips 23A and 23B are in surface contact with the metal sheet M. As a result, slip is less likely to occur between the metal sheet M and the flat surface, and thus stable spot welding can be performed.

FIG. 5A is a diagram showing a state where the first electrode 20A and the second electrode 20B are in contact with the metal sheet M in an actual spot welding scene. As the first electrode 20A is brought close to the second electrode 20B and each comes into contact with the metal sheet M at contact points P1 and P2, respectively, a load F is applied to the electrodes 20A and 20B. In an ideal state, the metal sheet M is disposed parallel to a plane X which is perpendicular to axes Y1 and Y2 along a longitudinal direction of the two electrodes which is a direction in which the two electrodes are brought close to each other. However, it is difficult to always maintain the accuracy of the disposition of the metal sheet M accurately. As shown, for example, the metal sheet M may be disposed to be tilted at a predetermined angle θ (for example, about 5°) from the plane X. That is, the first electrode 20A and the second electrode 20B are tilted with respect to the metal sheet M from a perpendicular direction.

In a case where a rigid electrode of a related art type, that is, a rigid electrode not provided with the elastic member 24 described above is used as the movable-side electrode, when performing the spot welding in such a state, a large tensile stress is generated since the tip end surface of the electrode tip is not appropriately in contact with the metal sheet M, whereby it is difficult to obtain spot welding of a constant quality. As an example of quality deterioration, defects such as an LME crack may occur.

Next, FIG. 5B is a diagram showing an action of the resistance spot welding apparatus 10 of the present embodiment. In the first electrode 20A of the present embodiment, the elastic member 24 described above is provided. Therefore, the elastic member 24 of the first electrode 20A is elastically deformed by the action of the load F generated from the electrode tips 23A and 23B which are the tip ends of the two electrodes, and the electrode tip 23A of the first electrode 20A is rotated in an arrow R1 direction around the contact point P1 (see FIG. 5A). As a result, even when the metal sheet M is not be moved, the electrode tip 23A of the first electrode 20A has a small tilt with respect to the plane X of the metal sheet M, and is in a state of intersecting the metal sheet M substantially perpendicularly, and the electrode tip 23A of the first electrode 20A can maintain a state of being in contact with the metal sheet M from the perpendicular direction. That is, the elastic member 24 functions as an angle correction mechanism that corrects the angle (tilt angle) of the first electrode 20A with respect to the metal sheet M, and the electrode tip 23A of the first electrode 20A is in contact with the metal sheet M from a substantially perpendicular direction.

As shown in FIG. 5B, a slight deviation may occur between the axes Y1 and Y2 along a longitudinal direction of the first electrode 20A and the second electrode 20B due to the deformation. However, such a deviation is small, and good spot welding can be realized as compared with the state shown in FIG. 5A.

As described above, even when the first electrode 20A is in contact with the metal sheet M such as a steel sheet, which is a body to be joined, in a tilted state, the elastic member 24 is elastically deformed by receiving a force from the electrode tip 23A provided at the tip end, a relationship in which the axis along the longitudinal direction of the electrode tip 23A and the metal sheet M are substantially perpendicular to each other is realized, and further, this relationship can be easily maintained.

When the first electrode 20A and the metal sheet M are pressurized in a tilted state, a large tensile stress is generated, which tends to promote the LME crack. However, according to the resistance spot welding apparatus 10 of the present embodiment, the tensile stress is reduced at the contact portion between the electrode tip and the metal sheet M, and it is possible to significantly inhibit the LME crack caused by the tensile stress associated with the tilt angle and thus to inhibit the deterioration of the quality of the spot welding.

In the resistance spot welding method, the molten metal of the metal sheet M expands when a current is applied at the time of joining. Therefore, in the case of the related art type in which a rigid electrode not provided with the elastic member 24 is used as the movable-side electrode, there is a possibility that the pressurizing force rapidly increases and the LME crack occurs due to the impact. However, in the present embodiment, since the elastic member 24 can absorb the stress fluctuation to the metal sheet M due to the expansion of the molten metal, it is possible to prevent the increase of the pressurizing force to the metal sheet M, and it is possible to prevent the LME crack.

Since the cooling water is allowed to flow through the flow path T to the vicinity of the tip end of the first electrode 20A, that is, to the electrode tip 23A, it is possible to efficiently cool the electrode at the time of welding, and it is possible to improve the joining efficiency.

In the present embodiment, the flow path T includes the backward path T2 formed by the internal space H of the first electrode 20A, and the forward path T1 formed by the pipe 29 disposed in the internal space H. Therefore, the circulation of the cooling water is realized by a simple and compact configuration. However, the flow path T of the cooling water is not limited to such a configuration, and the cooling water may be cooled by other means.

By providing the conductive wire 25 for electrically connecting the first shank 21 and the second shank 22 on the outside of the elastic member 24, it is possible to smoothly energize the electrode even when the elastic member 24 is elastically deformed.

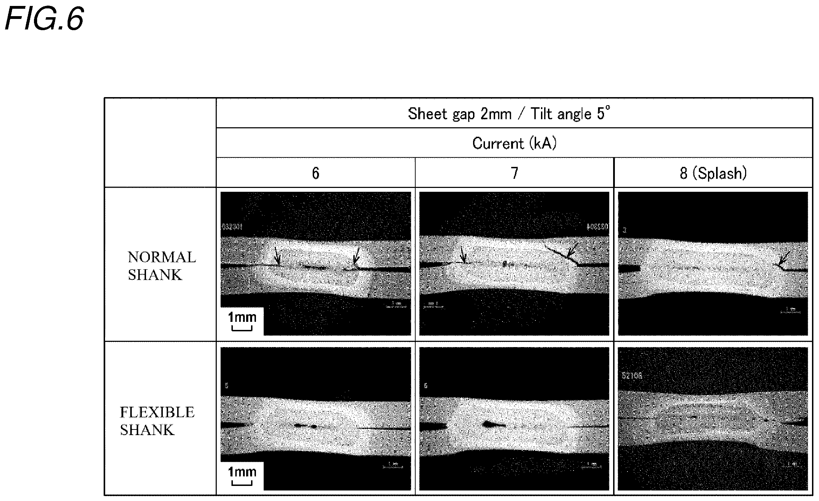

FIG. 6 is a cross-sectional view showing a comparison between joints which are resistance spot welded by a resistance spot welding apparatus of the related art in which both a movable-side electrode and a fixed-side electrode are rigid electrodes (electrodes do not provided with the elastic member 24), and the resistance spot welding apparatus according to the first embodiment.

As welding conditions, two sheets of GA980DP steel sheets each having a sheet thickness of 1.4 mm were stacked, and spot welding is performed on a plurality of pairs of metal sheets M under conditions of a pressurizing force of 3.5 kN, an energization time of 300 ms, a holding time of 0.01 sec or longer, a sheet gap of 2 mm, and a tilt angle of 5°. The current was set to 6 kA, 7 kA, and 8 kA. Note that spot welding at a welding current of 8 kA is a condition under which splash occurs.

As shown in FIG. 6, in the spot welding by the resistance spot welding apparatus of the related art, the LME crack occurs in all the pairs of metal sheets M as indicated by arrows in the drawing at any current (6 kA, 7 kA, and 8 kA).

On the other hand, in the spot welding by the resistance spot welding apparatus 10 according to the present embodiment, the LME crack does not occur under any condition. It is considered that this is due to the tilt angle correction by the angle correction mechanism of the first electrode 20A provided with the elastic member 24 and the stress fluctuation relaxation of the steel sheet by the pressurizing force absorbing mechanism.

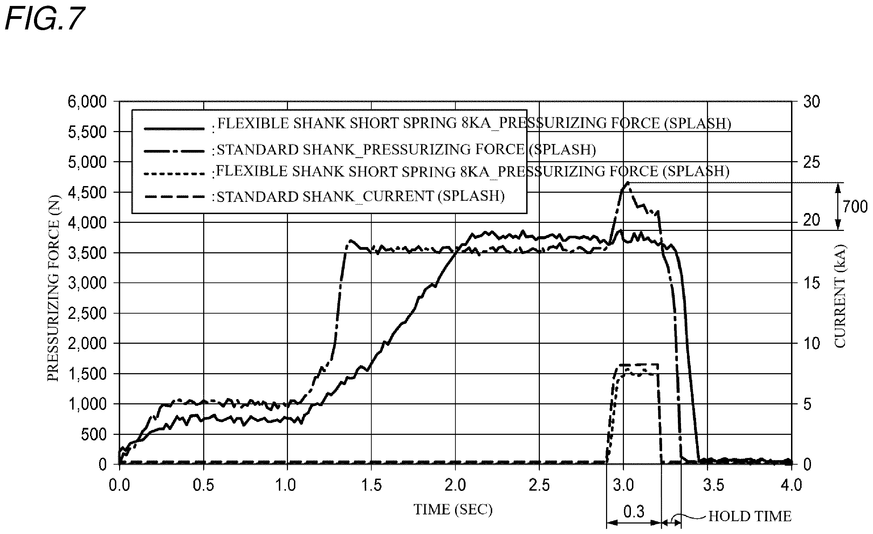

FIG. 7 is a graph showing a comparison between changes in the pressurizing force and the welding current when performing the resistance spot welding at a welding current of 8 kA by the resistance spot welding apparatus of the related art and the resistance spot welding apparatus according to the present embodiment. In any of the resistance spot welding methods, the first electrode 20A is lowered by the pressurizing cylinder 12, the plurality of metal sheets M are sandwiched between the pair of electrode tips 23A and 23B, and further, a predetermined pressurizing force is applied to the pair of electrode tips 23A and 23B by the pressurizing cylinder 12. In the present embodiment, since the elastic member 24 is elastically deformed, the pressurizing force gradually increases to a predetermined pressurizing force. Thereafter, the pair of electrode tips 23A and 23B are energized for a predetermined time (about 0.3 sec) with the pressurizing force applied, and the pressurizing force is removed at a timing when a predetermined hold time has elapsed after the energization.

As shown in FIG. 7, when the welding current is applied, the pressurizing force is increased by about 700 N in the resistance spot welding apparatus of the related art as compared with the resistance spot welding apparatus 10 of the present embodiment, whereas in the resistance spot welding apparatus 10 of the present embodiment, the pressurizing force is not increased and is stable. It is considered that this is because the stress fluctuation to the metal sheet M due to the expansion of the molten metal is absorbed by the elastic deformation of the elastic member 24 acting as the pressurizing force absorbing mechanism, and as a result, the LME crack is inhibited. That is, it is assumed that the coil spring as the elastic member 24 acts as the pressurizing force absorbing mechanism that absorbs a load fluctuation of the pressurizing force generated when the metal sheet M is energized, and resistance spot welding is performed while absorbing the load fluctuation of the pressurizing force.

The thermal contraction of a nugget due to cooling of the metal sheet M after the energization may cause a tensile stress in a sheet width direction, resulting in the LME crack at a pressure contact portion. Therefore, the holding time for maintaining the pressurizing force after the energization and securing the cooling time after the welding can reduce the tensile stress in the sheet width direction due to the thermal contraction of the nugget, and is effective for inhibiting the occurrence of the LME crack. In order to effectively inhibit the occurrence of the LME crack, as the hold time, pressuring is held for 0.01 sec or longer after the completion of the energization, and then control is performed to switch from pressurization to pressure release of the electrodes, which is preferable.

### (Second Embodiment)

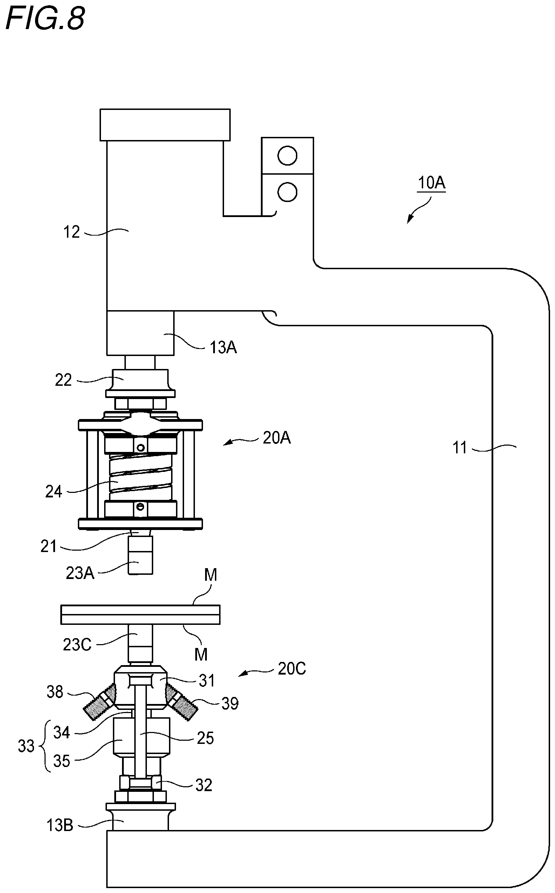

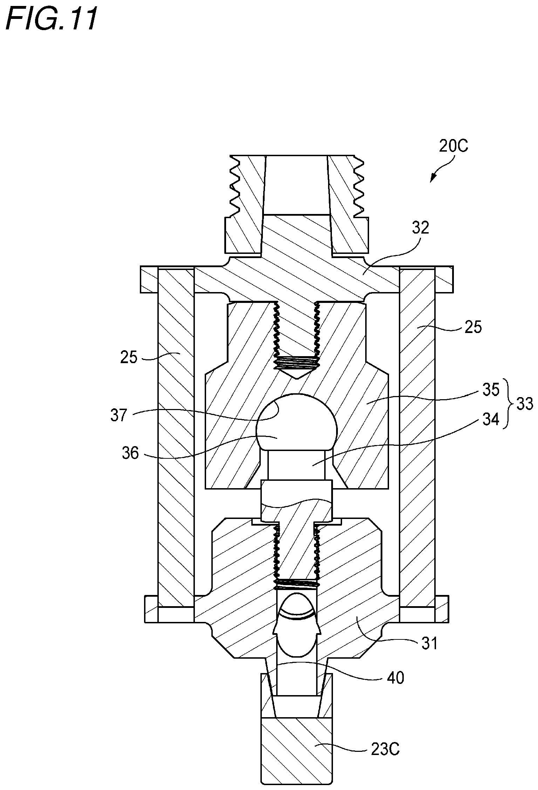

Next, a resistance spot welding apparatus according to a second embodiment of the present invention is described with reference to FIG. 8 to FIG. 11. The resistance spot welding apparatus of the present embodiment aims to further inhibit the occurrence of an LME crack due to a tilt angle by bringing both electrode tips of a movable-side electrode and a fixed-side electrode into contact with a steel sheet substantially perpendicularly, and to inhibit the occurrence of the LME crack by absorbing an impact force generated due to expansion of a molten metal during the energization by the movable-side electrode.

As shown in FIG. 8, a resistance spot welding apparatus 10A of the present embodiment includes a frame 11 having a substantially C-shape in a plan view, a pressurizing cylinder 12 provided at one end of the frame 11, two bases 13A and 13B provided at opposite ends of the pressurizing cylinder 12 and the frame 11, a first electrode 20A, as a movable-side electrode, provided on the base 13A on a movable side, and a third second electrode 20C, as a fixed-side electrode, provided on the base 13B on a fixed side. The first electrode 20A and the third electrode 20C are disposed so as to face each other on the same axis.

The first electrode 20A is provided with the elastic member 24 that can be elastically deformed. Since the first electrode 20A has the same structure as the first electrode 20A of the first embodiment, a detailed description of a structure, an action, etc. thereof is omitted.

In the third electrode 20C, a first shank 31 and a second shank 32 are connected by a universal joint 33. In the third electrode 20C, a tilt angle is corrected by the action of the angle correction mechanism by the universal joint 33, so that an electrode tip 23C and the metal sheet M are substantially perpendicular to each other.

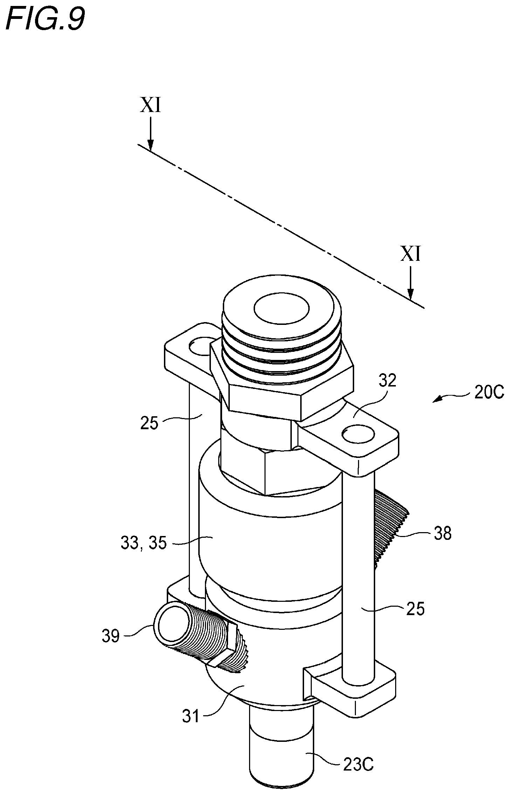

As shown in FIG. 9 to FIG. 11, the third electrode 20C includes the first shank 31, the second shank 32, the electrode tip 23C, the universal joint 33 that bendably connects the first shank 31 and the second shank 32, and the conductive wire 25.

The first shank 31 and the second shank 32 are formed of a metal (alloy) such as brass, and have conductivity. The electrode tip 23C is provided at one end of the first shank 31, which is a tip end of the third electrode 20C, and is in direct contact with the metal sheet M.

The universal joint 33 includes a male joint 34 fixed to the first shank 31 and a female joint 35 fixed to the second shank 32. The male joint 34 has a tip end portion 36 formed in a substantially spherical shape. The tip end portion 36 is bendably fitted into a spherical hole 37 of the female joint 35. A water supply pipe 38 and a water drain pipe 39 are connected from an oblique direction to an axial hole 40 formed at an axial center of the first shank 31.

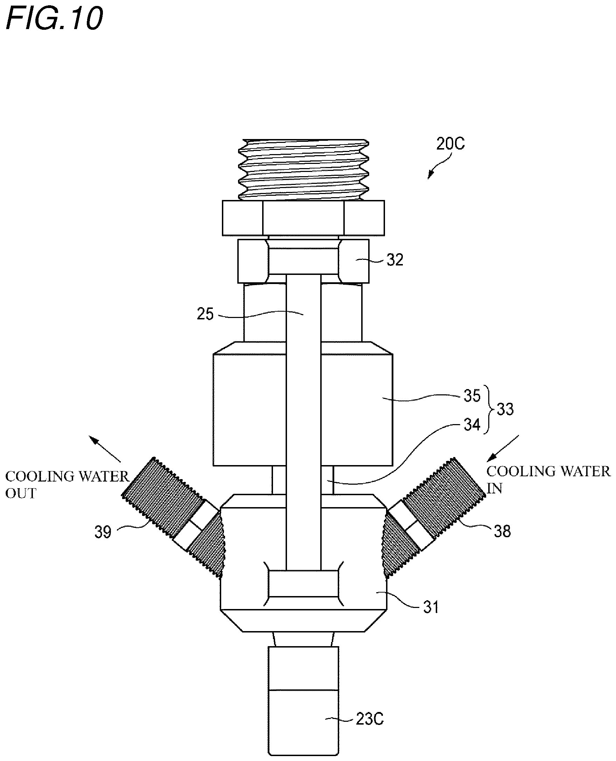

As indicated by an arrow of "cooling water IN" in FIG. 10, the cooling water supplied from a main body of the spot welding machine 10A is allowed to flow through the water supply pipe 38, and reaches the electrode tip 23C. As indicated by an arrow of "cooling water OUT", the cooling water which has reached the electrode tip 23C and whose temperature has risen returns to the main body of the spot welding machine 10A from the water drain pipe 39, and is cooled again.

In the universal joint 33 in which the spherical tip end portion 36 is bendably fitted in the spherical hole 37, in the case where the metal sheet M such as a steel sheet is tilted with respect to the axial center of the third electrode 20C, the male joint 34 is bent with respect to the female joint 35, and the electrode tip 23C is substantially perpendicular to the metal sheet M when the third electrode 20C is in contact with the metal sheet M. That is, the universal joint 33 functions as an angle correction mechanism capable of correcting the angle of the electrode tip 23C with respect to the metal sheet M to correct the tilt angle of the electrode tip 23C, thereby reducing the tensile stress and inhibiting the LME crack. The universal joint 33 is configured not to bend beyond a predetermined angle.

Since the third electrode 20C in which the first shank 31 and the second shank 32 are connected to each other by the universal joint 33 has high rigidity in the axial direction, the axial position can be maintained at a constant position, and stable resistance spot welding can be performed even when a pressurizing force acts on the third electrode 20C from the metal sheet M.

On the other hand, in the first electrode 20A as a movable-side electrode, the tilt angle of the first electrode 20A is corrected by the angle correction mechanism of the elastic member 24, and the electrode tip 23A is in contact with the metal sheet M from a substantially perpendicular direction, thereby inhibiting the LME crack caused by the tilt angle. Further, by the pressurizing force absorbing mechanism of the elastic member 24 provided on the first electrode 20A, the stress fluctuation of the metal sheet M due to the thermal expansion of the metal sheet M generated during the energization is relaxed, thereby inhibiting the LME crack.

As described above, in both of the first electrode 20A and the third electrode 20C, since the electrode tips 23A and 23C are in contact with the metal sheet M from the substantially perpendicular direction, the tilt angle is corrected not only in the movable-side electrode but also in the fixed-side electrode. Therefore, it is possible to further inhibit the LME crack caused by the tensile stress due to the tilt angle as compared with the resistance spot welding apparatus 10 of the first embodiment.

Other parts of the resistance spot welding apparatus 10A are the same as those of the resistance spot welding apparatus 10 according to the first embodiment and accordingly the same parts are denoted by the same reference numerals or signs and descriptions thereof will be simplified or omitted.

### (Third Embodiment)

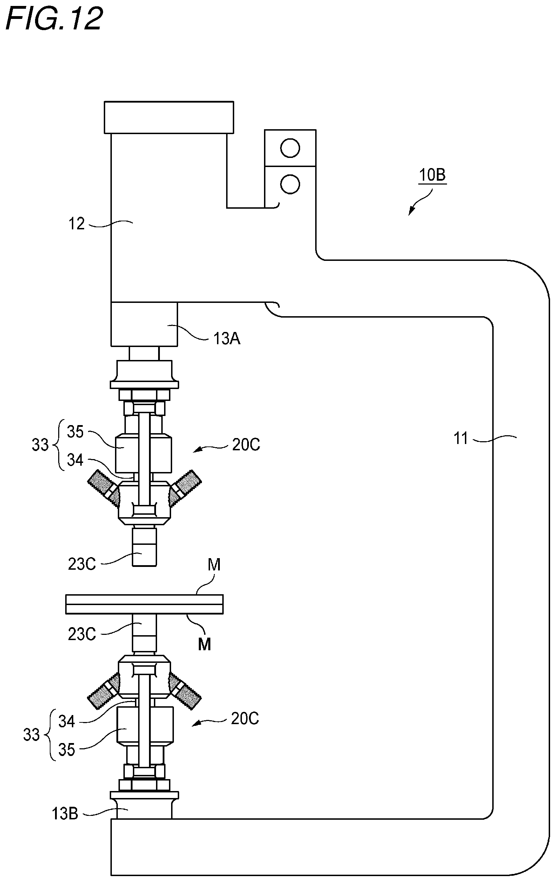

Next, a resistance spot welding apparatus according to a third embodiment of the present invention is described with reference to FIG. 12. The resistance spot welding apparatus of the present embodiment aims to inhibit the occurrence of an LME crack due to a tilt angle by bringing both electrode tips of a movable-side electrode and a fixed-side electrode into contact with a steel sheet substantially perpendicularly.

FIG. 12 is a side view showing the resistance spot welding apparatus according to the third embodiment of the present invention. In a resistance spot welding apparatus 10B of the present embodiment, both a movable-side electrode and a fixed-side electrode are formed of the third electrode 20C which has the universal joint 33 described in the second embodiment.

The third electrode 20C is not provided with the elastic member 24, and therefore the stress fluctuation of the metal sheet M is not absorbed by the pressurizing force absorbing mechanism. However, since the tilt angle is corrected by an action of an angle correction mechanism by the universal joint 33 on both the movable side and the fixed side, it is possible to inhibit the occurrence of the LME crack due to the tilt angle.

Since the universal joint 33 of the third electrode 20C has substantially the same rigidity as that of the second electrode 20B (see FIG. 1) with respect to an axial direction, a pressurizing time required from the start of pressurization to reaching a predetermined pressurizing force and a remaining pressurizing time after the completion of pressurization shown in FIG. 7 can be shortened as compared with the first electrode 20A, and joining can be performed in a short time as a whole.

Other parts of the resistance spot welding apparatus 10B are the same as those of the resistance spot welding apparatus 10A according to the second embodiment and accordingly the same parts are denoted by the same reference numerals or signs and descriptions thereof will be simplified or omitted.

### (Fourth Embodiment)

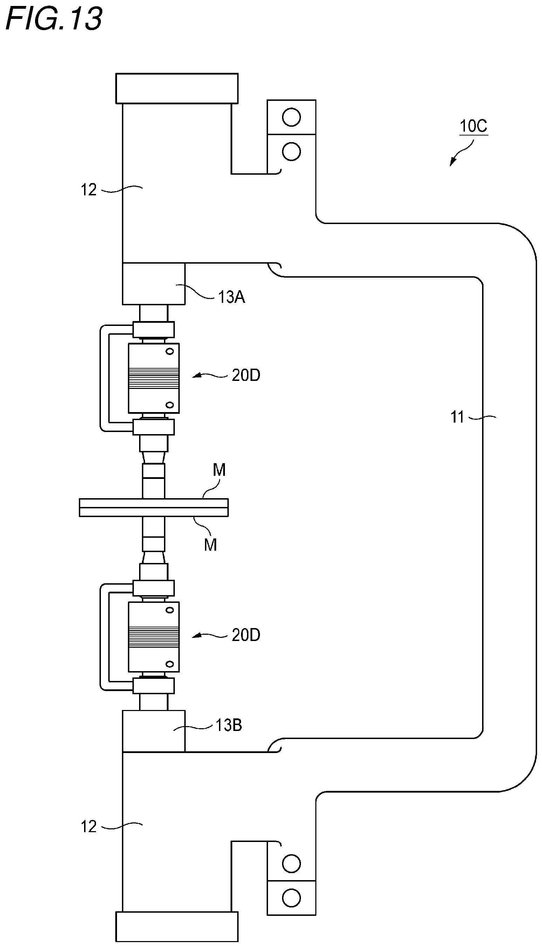

Next, a resistance spot welding apparatus according to a fourth embodiment of the present invention is described with reference to FIG. 13 to FIG. 18. The resistance spot welding apparatus of the present embodiment aims to inhibit the occurrence of an LME crack due to a tilt angle by bringing both electrode tips of a pair of movable-side electrodes into contact with a steel sheet substantially perpendicularly, and to further inhibit the occurrence of the LME crack by absorbing an impact force generated due to expansion of a molten metal during the energization by the pair of movable-side electrodes.

FIG. 13 is a side view showing the resistance spot welding apparatus according to the fourth embodiment of the present invention. The resistance spot welding apparatus 10C includes a frame 11 having a substantially C-shape in a plan view, pressurizing cylinders 12 provided at both ends of the frame 11, two bases 13A and 13B provided on the pressure cylinders 12, and a pair of fourth electrodes 20D, as a pair of movable-side electrodes, provided on the two bases 13A and 13B, respectively. The pair of fourth electrodes 20D is disposed so as to face each other on the same axis.

When performing spot welding, a metal sheet M, obtained by superposing a plurality of (two in the drawing) bodies to be joined, such as a steel sheet is inserted between the pair of fourth electrodes 20D, the pair of fourth electrodes 20D are brought close to each other by the pressurizing cylinder 12, and the metal sheet M is sandwiched between the pair of fourth electrodes 20D. As a result, an elastic member 43 can contract, thereby stabilizing a position of the metal sheet M in a sheet thickness direction. In this state, the pair of electrodes is energized while being pressurized to perform spot welding. In the present embodiment, the pair of fourth electrodes 20D are of exactly the same type.

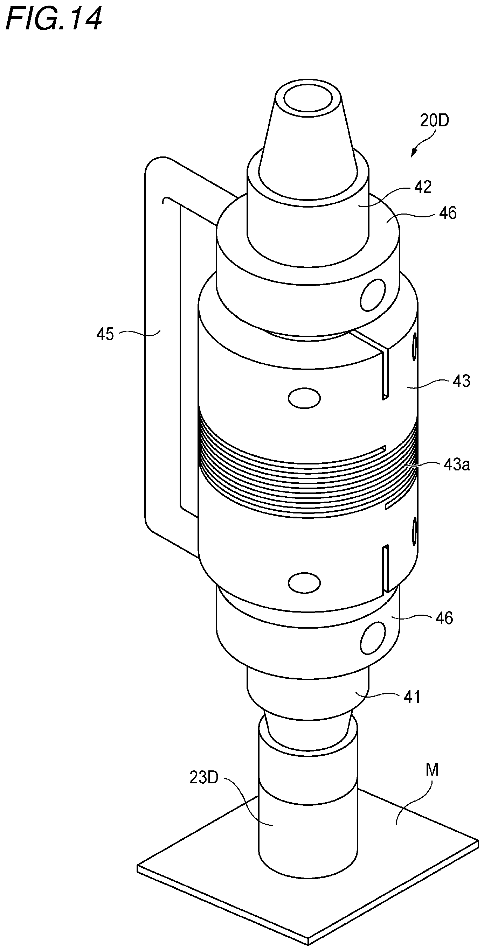

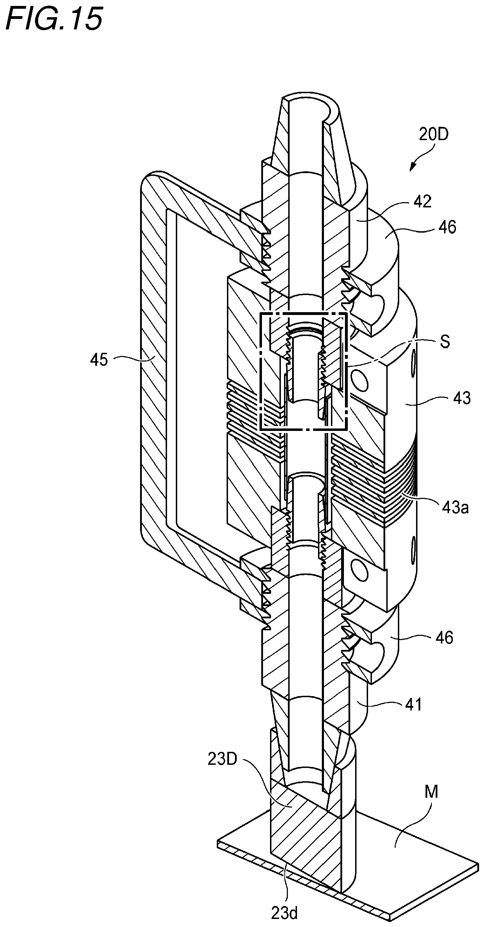

FIG. 14 is a perspective view showing the fourth electrode 20D. FIG. 15 is a cross-sectional view of FIG. 14. The fourth electrode 20D includes a first shank (first electrode shank) 41, a second shank (second electrode shank) 42, an electrode tip 23D, the elastic member 43, a conductive wire 45, and rings 46.

The first shank 41 and the second shank 42 are formed of a metal (alloy) such as brass, for example, and have conductivity. In the present embodiment, the first shank 41 and the second shank 42 are of exactly the same type. The electrode tip 23D is provided at a first end of the first shank 41, which is a tip end of the fourth electrode 20D, and is in direct contact with the metal sheet M.

The elastic member 43 connects the second shank 42 and a second end opposite to a first end of the first shank 41 provided with the electrode tip 23D. The elastic member 43 has rigidity enough to avoid breakage even when a predetermined load is applied to the fourth electrode 20D, and has a property of being elastically deformable by the action of the load. In the present embodiment, the elastic member 43 is formed of a cylindrical block made of a metal such as steel, and the block is provided with a notch 43a for promoting elastic deformation.

The conductive wire 45 made of a metal (e.g., copper) is connected to the rings 46 formed of a metal (e.g., copper) and attached to the outer periphery of the first shank 41 and the second shank 42, respectively. Even when the elastic member 43 is made of a metal, it is difficult to secure a sufficient electrical connection between the first shank 41 and the second shank 42 when the conductivity thereof is not sufficient (a large current is required for spot welding). Therefore, the conductive wire 45 is provided so as to bypass the outside of the elastic member 43, and electrically connects the first shank 41 and the second shank 42. The current supplied from the main body of the resistance spot welding apparatus 10C via the pressurizing cylinder 12 and the base 13A is allowed to flow in order of the second shank 42, the ring 46, the conductive wire 45, the ring 46, the first shank 41, and the electrode tip 23D, and reaches the metal sheet M.

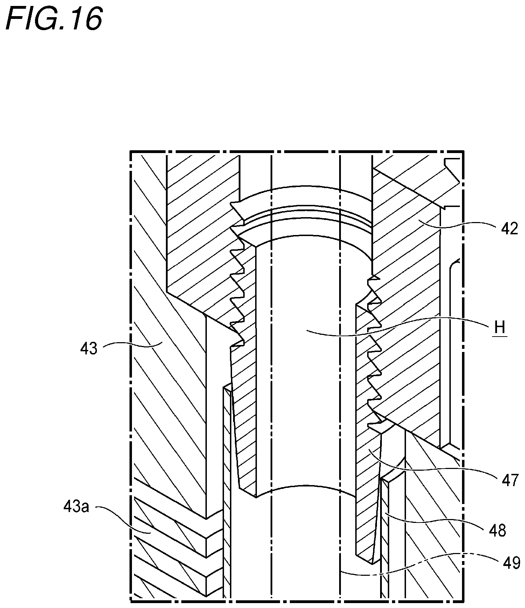

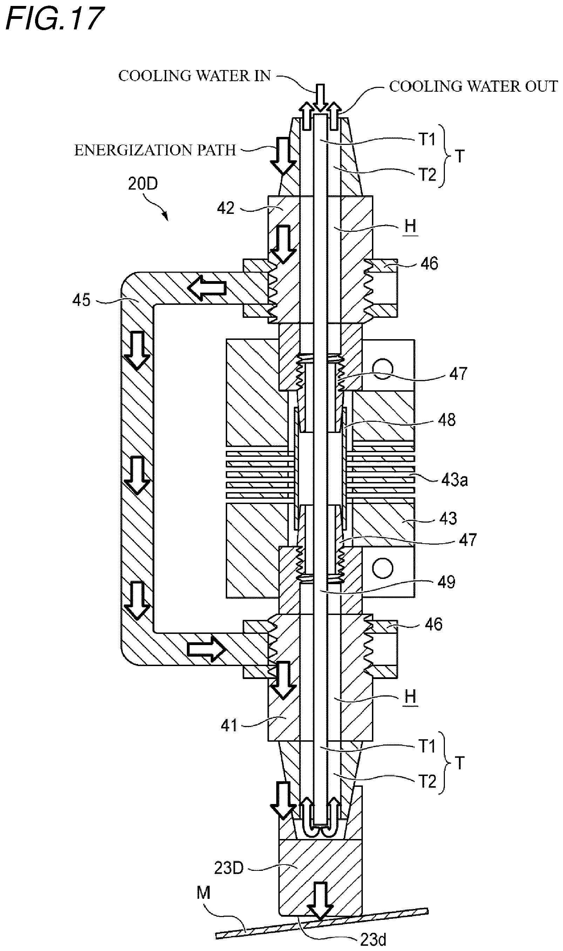

FIG. 16 is an enlarged view showing a region S in FIG. 15. FIG. 17 is a cross-sectional view showing the fourth electrode. The fourth electrode 20D has a structure for allowing not only a current but also cooling water for cooling the fourth electrode 20D itself, particularly the electrode tip 23D at the tip end to flow. That is, as shown in FIG. 17, a flow path T for allowing the cooling water to flow is provided so as to penetrate the inside of each of the first shank 41, the elastic member 43, and the second shank 42.

The flow path T includes a forward path T1 for allowing the cooling water supplied from the main body of the resistance spot welding apparatus 10C to the electrode tip 23D to flow, and a backward path T2 for returning the cooling water that has cooled the electrode tip 23D to the main body of the resistance spot welding apparatus 10C. The backward path T2 is formed by an internal space H penetrating the inside of each of the first shank 41, the elastic member 43, and the second shank 42. The first shank 41 and the second shank 42 are hollowed out so that the central portions thereof are hollow along the longitudinal direction, and the hollowed out portions form the internal space H. Similarly, the elastic member 43 is hollowed out so that the central portion thereof is hollow along the longitudinal direction. As shown in FIG. 17, at the upper and lower ends of the hollowed out portion, a hose joint 47 screwed with each of the first shank 41 and the second shank 42 and a hose 48 connected to the hose joint 47 are disposed in the hollowed out portion, and the insides of the hose joint 47 and the hose 48 form the internal space H.

The forward path T1 is disposed in the internal space H, and is formed by an integral pipe 49 penetrating the first shank 41, the elastic member 43, and the second shank 42. Although omitted in FIG. 15, the pipe 49 is a cylindrical elongated member disposed on the central axis of the internal space H and formed of, for example, a resin, as shown by dashed lines in FIG. 16 or FIG. 17.

As indicated by an arrow of "cooling water IN" in FIG. 17, the cooling water supplied from the main body of the resistance spot welding apparatus 10C is allowed to flow through the pipe 49 from the second shank 42 via the elastic member 43 and the first shank 41, and reaches the electrode tip 23D. As indicated by an arrow of "cooling water OUT", the cooling water which has reached the electrode tip 23D and whose temperature has risen is allowed to flow through the internal space H outside the pipe 49 via the first shank 41, the elastic member 43, and the second shank 42, returns to the main body of the resistance spot welding apparatus 10C, and is cooled again. In this way, the cooling water circulates through the main body of the resistance spot welding apparatus 10C and the electrode, and the cooling water which has been cooled to a certain temperature or less is supplied to the electrode tip 23D at all times. Therefore, the temperature rising of the fourth electrode 20D, particularly the electrode tip 23D, can be inhibited, and the joining efficiency of spot welding can be improved. The current for spot welding is supplied from the main body of the resistance spot welding apparatus 10C via the pressurizing cylinder 12 and the base 13A in accordance with the arrow of the "energization path" in FIG. 17, is allowed to flow in order of the second shank 42, the conductive wire 45, the first shank 41, and the electrode tip 23D, and reaches the metal sheet M.

The electrode tip 23D has a flat surface 23d that is in direct contact with the metal sheet M. When the fourth electrode 20D can maintain a substantially perpendicular relationship to the metal sheet M, the flat surface 23d of the electrode tip 23D of each electrode is in surface contact with the metal sheet M. As a result, slip is less likely to occur between the metal sheet M and the flat surface 23d, and thus stable spot welding can be performed. It is sufficient that the flat surface 23d is present in at least a part of the tip end portion of the electrode tip 23D. As shown in FIG. 17, the entire surface of the electrode tip 23D facing the metal sheet M may have a flat surface. Only the tip end portion of the electrode tip 23D may have a flat surface, and a portion around the tip end portion may have a curvature.

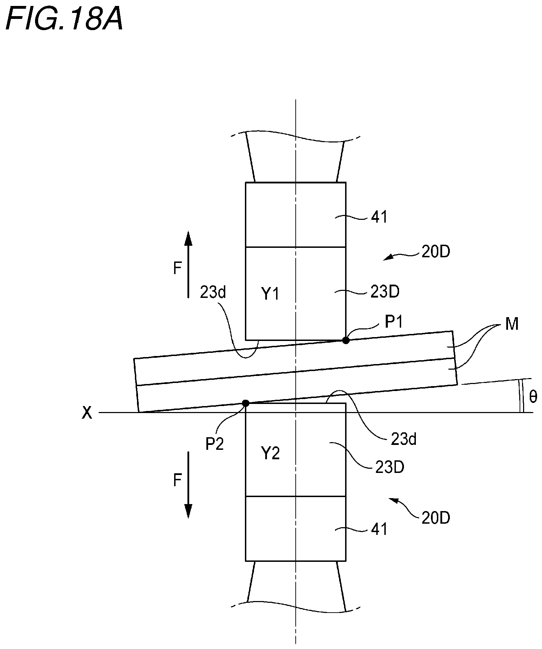

FIG. 18A is a diagram showing a state where the fourth electrode 20D and the metal sheet M can take in an actual spot welding scene. When the pair of fourth electrodes 20D is brought close to each other and is in contact with the metal sheet M at contact points P1 and P2, a load F is applied to each electrode. In an ideal state, the metal sheet M is disposed parallel to a plane X which is perpendicular to axes Y1 and Y2 along a longitudinal direction of the two electrodes which is a direction in which the two electrodes are brought close to each other. However, it is difficult to always maintain the accuracy of the disposition of the metal sheet M accurately. As shown, for example, the metal sheet M may be disposed to be tilted at a predetermined angle θ (for example, about 5°) from the plane X. That is, the pair of fourth electrodes 20D is tilted with respect to the metal sheet M from a perpendicular direction.

When performing spot welding in such a state using a rigid electrode of a related art type which is not the fourth electrode 20D of the present embodiment, that is, a rigid electrode not provided with the elastic member 43 described above that can be elastically deformed, it is difficult to obtain spot welding of constant quality since the flat surface 23d of the electrode tip 23D is not appropriately in contact with the metal sheet M. As an example of quality deterioration, defects such as a liquid metal embrittlement (LEM) crack may occur.

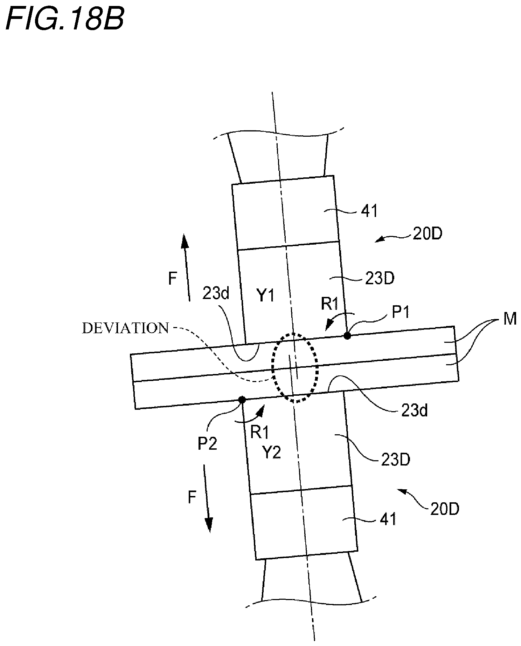

FIG. 18B is a diagram showing an action of the pair of fourth electrodes 20D of the present embodiment. In the fourth electrode 20D of the present embodiment, the elastic member 43 described above is provided. Therefore, due to the action of the load F generated from the electrode tip 23D which is the tip end of the two electrodes, the respective elastic members 43 are elastically deformed, and both the electrode tips 23D are rotated in an arrow R1 direction around the contact points P1 and P2. As a result, even when the metal sheet M is not be moved, the axes Y1 and Y2 along the longitudinal direction of the two electrodes is in a state of intersecting the metal sheet M substantially perpendicularly, and the pair of fourth electrodes 20D can maintain a state of being in contact with the metal sheet M from the substantially perpendicular direction. As a result, the flat surface 23d of each of the pair of fourth electrodes 20D is in appropriate surface contact with the metal sheet M, which inhibits the occurrence of the LME crack and enables stable spot welding.

As indicated by the broken line in FIG. 18B, a slight deviation may occur between the axes Y1 and Y2 along the longitudinal direction of each of the pair of fourth electrodes 20D due to the deformation described above. However, such a deviation is small, and good spot welding can be realized as compared with the state in FIG. 18A.

As described above, even when the fourth electrode 20D is in contact with the metal sheet M such as a steel sheet, which is a body to be joined, in a tilted state, the elastic member 43 is elastically deformed by receiving a force from the electrode tip 23D provided at the tip end, a relationship in which the axis along the longitudinal direction of the electrode and the metal sheet M are substantially perpendicular to each other is realized, and further, this relationship can be easily maintained. Therefore, it is possible to inhibit a decrease in the quality of spot welding due to the tilt angle.

When the surface of the electrode tip 23D in contact with the metal sheet M is formed by a curved surface, it is considered that slip is likely to occur between the curved surface and the metal sheet M, and welding may become unstable. However, in the present embodiment, the surface in contact with the metal sheet M is formed by the flat surface 23d, so that slip is less likely to occur between the metal sheet M and the flat surface 23d, and the load generated from the electrode tip 23D can be reliably transmitted to the elastic member 43. As a result, deformation of the elastic member 43 is promoted, and as shown in FIG. 18B, a state where the tilt angle is corrected can be easily realized, and this state can be stably maintained.

The elastic member 43 provided on the pair of fourth electrodes 20D is elastically deformed to absorb an increase in the pressurizing force due to the expansion of the molten metal during the energization. As a result, the occurrence of the LME crack due to the impact of expansion of the molten metal during the energization can be inhibited.

Since the cooling water is allowed to flow through the flow path T to the vicinity of the tip end of the electrode, that is, to the electrode tip 23D, the electrode can be efficiently cooled at the time of welding, and the joining efficiency can be improved.

In the present embodiment, the flow path T includes the backward path T2 formed by the internal space H of the electrode and the forward path T1 formed by the pipe 49 disposed in the internal space H. Therefore, the circulation of the cooling water is realized by a simple and compact configuration. However, the flow path T of the cooling water is not limited to such a configuration, and the electrode may be cooled by other means.

By providing the conductive wire 45 for electrically connecting the first shank 41 and the second shank 42 on the outside of the elastic member 43, it is possible to smoothly energize the electrode even when the elastic member 43 is elastically deformed.

In the present embodiment, the elastic member 43 is made of a cylindrical block made of a metal such as steel, and the block is provided with the notch 43a for promoting elastic deformation. However, the specific shape, structure, material, and the like of the elastic member 43 are not particularly limited. For example, the elastic member 43 may be formed of a material having both sufficient rigidity and conductivity. In such a case, the wire diameter of the conductive wire 45 may be reduced, or the conductive wire 45 itself may be omitted.

The notch 43a of the present embodiment is formed, for example, in a spiral shape so as to extend in a circumferential direction and a longitudinal direction of the elastic member 43. The specific mode is not particularly limited as long as the elastic deformation of the elastic member 43 can be promoted. A member such as a spring may be provided to realize elastic deformation. When a small amount of current is allowed to flow through the elastic member 43, the elastic member 43 may be melted and the notch 43a may be embedded. In order to prevent such a situation, a non-conductive material such as resin or rubber may be embedded in the notch 43a.

The present invention is not limited to the embodiments described above, and modifications, improvements, or the like can be made as appropriate. Materials, shapes, sizes, numerical values, forms, numbers, arrangement positions, and the like of components in the above embodiment are set as desired and not limited as long as the present invention can be achieved.

For example, the pressurizing force absorbing mechanism of the present invention is not limited to the form of the elastic member 24 of the first and second embodiments or the elastic member 43 of the fourth embodiment, and for example, an elastic force of a pneumatic device such as an air cylinder (not shown) can be used.

The resistance spot welding apparatus of the present invention can also be applied to a welding apparatus (not shown) of a simple type, a portable type, or the like in which a pair of long electrodes having a substantially L shape extends forward from the main body of the welding apparatus, and tip ends thereof can be opened and closed so as to be able to approach and separate from each other. Specifically, a structure may be adopted in which one electrode is fixed to the main body of the welding apparatus, the other electrode is made swingable about an axis provided in the main body of the welding apparatus, and a spring for biasing the tip end of the other electrode toward the tip end of the one electrode is provided between the other electrode and the main body of the welding apparatus. In this case, the spring provided between the other electrode and the main body of the welding apparatus acts as the pressurizing force absorbing mechanism to absorb an increase in the pressurizing force due to expansion of the molten metal during the energization, thereby preventing the LME crack due to the impact.

As described above, the following matters are disclosed in the present specification.
(1) A resistance spot welding method for spot welding a plurality of steel sheets including at least one galvanized steel sheet containing 0.08 mass% or more of C and 0.50 mass% or more of Si and having a tensile strength of 980 MPa or more,
   the resistance spot welding method including, using a pair of electrodes including a pair of electrode tips configured to sandwich and pressurize the plurality of steel sheets and a pressurizing force absorbing mechanism provided in at least one of the pair of electrode tips and capable of absorbing a pressurizing force in an axial direction of the electrode tips,
   welding by sandwiching the plurality of steel sheets between the pair of electrode tips and energizing the pair of electrode tips with a pressurizing force applied, while absorbing a fluctuation load of the pressurizing force generated during the energization by the pressurizing force absorbing mechanism.
(2) The resistance spot welding method according to (1), in which one of the pair of electrodes is a fixed electrode and the other is a movable electrode, and the pressurizing force absorbing mechanism is provided on a side of the movable electrode.
(3) The resistance spot welding method according to (1) or (2), in which the pressurizing force absorbing mechanism is a mechanism using an elastic member.
(4) The resistance spot welding method according to (3), in which the elastic member is formed of a spring having a spring constant of 10 N/mm or more and 1500 N/mm or less.
(5) The resistance spot welding method according to (1) or (2), in which the pressurizing force absorbing mechanism is a mechanism using a pneumatic pressure.
(6) A resistance spot welding method for spot welding a plurality of steel sheets including at least one galvanized steel sheet containing 0.08 mass% or more of C and 0.50 mass% or more of Si and having a tensile strength of 980 MPa or more,
   the resistance spot welding method including, using a pair of electrodes including a pair of electrode tips configured to sandwich and pressurize the plurality of steel sheets and a pair of angle correction mechanisms capable of correcting angles of the pair of electrode tips with respect to the steel sheets, respectively,
   welding by sandwiching the plurality of steel sheets between the pair of electrode tips and energizing the pair of electrode tips with a pressurizing force applied, while bringing the pair of electrode tips into contact with the plurality of steel sheets such that axes of the pair of electrode tips are substantially perpendicular to the steel sheets.
(7) The resistance spot welding method according to (6), in which at least one of the pair of angle correction mechanisms is a mechanism using a universal joint.
(8) The resistance spot welding method according to (7), in which one of the pair of electrodes is a fixed electrode and the other is a movable electrode, and the mechanism using a universal joint is provided on a side of the fixed electrode.
(9) The resistance spot welding method according to (8), in which one of the pair of angle correction mechanisms is the mechanism using a universal joint provided on the side of the fixed electrode, and the other is a mechanism using an elastic member provided on a side of the movable electrode.
(10) The resistance spot welding method according to (9), in which the elastic member is formed of a spring having a spring constant of 10 N/mm or more and 1500 N/mm or less.
(11) The resistance spot welding method according to (7), in which both of the pair of angle correction mechanisms are the mechanism using a universal joint.
(12) The resistance spot welding method according to any one of (1) to (11), in which the electrode tip has a curvature radius R of a tip end surface satisfying R ≤ 100 mm, and an outer diameter ϕ satisfying ϕ ≤ 16 mm.
(13) The resistance spot welding method according to any one of (1) to (11), in which at least a part of a tip end portion of the electrode tip has a flat surface to be in contact with the steel sheet.
(14) The resistance spot welding method according to any one of (1) to (13), in which pressuring is held for 0.01 sec or longer after completion of the energization, and then control is performed to switch from pressurization to pressure release of the electrodes.
(15) The resistance spot welding method according to any one of (1) to (14), in which a welding current is an alternating current.
(16) An electrode for a spot welding gun, including
   a first electrode shank;
   a second electrode shank;
   an electrode tip provided at a first end of the first electrode shank and having a flat surface; and
   a connection member configured to connect the second electrode shank and a second end of the first electrode shank and is elastically deformable, in which
   a flow path for allowing cooling water to flow is provided so as to penetrate the inside of each of the first electrode shank, the connection member, and the second electrode shank.
(17) The electrode for a spot welding gun according to 16, in which a conductive wire configured to electrically connect the first electrode shank and the second electrode shank is provided outside the connection member.
(18) The electrode for a spot welding gun according to (16) or (17), in which the connection member is formed of a metal block, and the metal block is provided with a notch that promotes elastic deformation.
(19) The electrode for a spot welding gun according to any one of (16) to (18), in which
   the flow path includes a forward path through which the cooling water is allowed to flow from the second electrode shank toward the electrode tip, and a backward path through which the cooling water is allowed to flow from the electrode tip toward the second electrode shank,
   the backward path is formed by an internal space penetrating the inside of each of the first electrode shank, the connection member, and the second electrode shank, and
   the forward path is disposed in the internal space, and is formed by an integrated pipe penetrating the first electrode shank, the connection member, and the second electrode shank.
(20) A spot welding gun including the electrode for a spot welding gun according to any one of (16) to (19).

Although various embodiments have been described above with reference to the drawings, it is needless to say that the present invention is not limited to these examples. It will be apparent to those skilled in the art that various changes and modifications may be conceived within the scope of the claims. It is also understood that the various changes and modifications belong to the technical scope of the present invention. Constituent elements in the embodiments described above may be combined freely within a range not departing from the spirit of the present invention.

This application is based on a Japanese utility model application (Japanese Utility Model Application No. 2020-000622) filed on February 25, 2020 and a Japanese patent application (Japanese Patent Application No. 2020-125561) filed on July 22, 2020, contents of which are incorporated herein by reference.

### REFERENCE SIGNS LIST

10, 10A, 10B, 10C Resistance spot welding apparatus (spot welding machine)
20A First electrode (electrode)
20B Second electrode (electrode)
20C Third electrode (electrode)
20D Fourth electrode (electrode)
23A, 23B, 23C, 23D Electrode tip
23d Flat surface
24 Elastic member (connection member, pressurizing force absorbing mechanism, angle correction mechanism)
43 Elastic member (connection member, pressurizing force absorbing mechanism, angle correction mechanism)
33 Universal joint
M Metal sheet (steel sheet)
R Curvature radius of tip end surface
ϕ Outer diameter

## Claims

1. A resistance spot welding method for spot welding a plurality of steel sheets including at least one galvanized steel sheet containing 0.08 mass% or more of C and 0.50 mass% or more of Si and having a tensile strength of 980 MPa or more,
the resistance spot welding method comprising, using a pair of electrodes including a pair of electrode tips configured to sandwich and pressurize the plurality of steel sheets and a pressurizing force absorbing mechanism provided in at least one of the pair of electrode tips and capable of absorbing a pressurizing force in an axial direction of the electrode tips,
welding by sandwiching the plurality of steel sheets between the pair of electrode tips and energizing the pair of electrode tips with a pressurizing force applied, while absorbing a fluctuation load of the pressurizing force generated during the energization by the pressurizing force absorbing mechanism.

2. The resistance spot welding method according to claim 1,
wherein one of the pair of electrodes is a fixed electrode and the other is a movable electrode, and the pressurizing force absorbing mechanism is provided on a side of the movable electrode.

3. The resistance spot welding method according to claim 1 or 2,
wherein the pressurizing force absorbing mechanism is a mechanism using an elastic member.

4. The resistance spot welding method according to claim 3,
wherein the elastic member is formed of a spring having a spring constant of 10 N/mm or more and 1500 N/mm or less.

5. The resistance spot welding method according to claim 1 or 2,
wherein the pressurizing force absorbing mechanism is a mechanism using a pneumatic pressure.

6. A resistance spot welding method for spot welding a plurality of steel sheets including at least one galvanized steel sheet containing 0.08 mass% or more of C and 0.50 mass% or more of Si and having a tensile strength of 980 MPa or more,
the resistance spot welding method comprising, using a pair of electrodes including a pair of electrode tips configured to sandwich and pressurize the plurality of steel sheets and a pair of angle correction mechanisms capable of correcting angles of the pair of electrode tips with respect to the steel sheets, respectively,
welding by sandwiching the plurality of steel sheets between the pair of electrode tips and energizing the pair of electrode tips with a pressurizing force applied, while bringing the pair of electrode tips into contact with the plurality of steel sheets such that axes of the pair of electrode tips are substantially perpendicular to the steel sheets.

7. The resistance spot welding method according to claim 6,
wherein at least one of the pair of angle correction mechanisms is a mechanism using a universal joint.

8. The resistance spot welding method according to claim 7,
wherein one of the pair of electrodes is a fixed electrode and the other is a movable electrode, and the mechanism using a universal joint is provided on a side of the fixed electrode.

9. The resistance spot welding method according to claim 8,
wherein one of the pair of angle correction mechanisms is the mechanism using a universal joint provided on the side of the fixed electrode, and the other is a mechanism using an elastic member provided on a side of the movable electrode.

10. The resistance spot welding method according to claim 9,
wherein the elastic member is formed of a spring having a spring constant of 10 N/mm or more and 1500 N/mm or less.

11. The resistance spot welding method according to claim 7,
wherein both of the pair of angle correction mechanisms are the mechanism using a universal joint.

12. The resistance spot welding method according to claim 1 or 6,
wherein the electrode tip has a curvature radius R of a tip end surface satisfying R ≤ 100 mm, and an outer diameter ϕ satisfying ϕ ≤ 16 mm.

13. The resistance spot welding method according to claim 1 or 6,
wherein at least a part of a tip end portion of the electrode tip has a flat surface to be in contact with the steel sheet.

14. The resistance spot welding method according to claim 1 or 6,
wherein pressuring is held for 0.01 sec or longer after completion of the energization, and then control is performed to switch from pressurization to pressure release of the electrodes.

15. The resistance spot welding method according to claim 1 or 6,
wherein a welding current is an alternating current.
